# DEMANDE DE BREVET EUROPEEN

(11) **EP 1 119 224 A1**
(43) Date de publication de la demande: **25.07.2001**
(21) Numéro de dépôt: 01400056.6
(22) Date de dépôt: 10.01.2001
(51) Int. Cl.: H05B 41/282, H02M 1/00

(54) **Appareil électrique, notamment élément éclairant à fluorescence, ayant un circuit d'alimentation comprenant un convertisseur asservi.**

(30) Priorité: 19.01.2000 FR 0000641
(71) Demandeur: High Distribution, 75010 Paris (FR)
(72) Inventeur: Lorgeou, Michel Raymond, 91460 Marcoussis (Essonne) (FR)
(74) Mandataire: Rataboul, Michel Charles

(57) **Abrégé**

L'invention concerne un appareil électrique, notamment élément éclairant indépendant ou associé à un ensemble tel qu'un luminaire, en particulier lampe ou tube à fluorescence, constituant une charge et associé à un ensemble d'alimentation composé d'un circuit d'entrée devant être relié à une source de courant alternatif et comprenant différents composants afin que la charge puisse être alimentée à fréquence élevée et à courant aussi stable que possible, ensemble d'alimentation comprenant à cette fin un redresseur de courant alternatif et un convertisseur de fréquence.

Cet appareil est caractérisé en ce que le circuit d'entrée comprend d'une part un hacheur (64) qui est relié à la sortie d'un générateur de fréquence (71) asservi à la tension résultante présente à l'entrée dudit hacheur (64) et d'autre part deux diodes (57 et 58) montées en série et entre lesquelles se trouve une jonction d'une ligne de retour (60).

## Description

On sait que les éléments éclairants à fluorescence tels que les lampes dites « fluo compact » ou les tubes fluorescents ont des caractéristiques électriques qui varient beaucoup pendant leur fonctionnement et qui occasionnent des irrégularités, du fait que la charge (l'élément éclairant proprement dit) a un comportement non linéaire.

On sait également que la tension du courant alternatif fourni aux usagers n'est pas stable puisqu'elle peut varier de 10 % en plus et en moins par rapport à sa valeur nominale, soit une plage de variation de 20 % environ. En outre, la valeur nominale est elle-même très différente d'une région du monde à une autre puisque les standards des réseaux de distribution s'étagent de 100 Volts à 240 Volts selon les pays. Exemples : Japon 100 V, États Unis 120 V, Chine 220 V, Europe 230 V, Australie 240 V.

Ces différences nominales et ces variations fonctionnelles ont de graves inconvénients sur la conception et sur le fonctionnement d'appareils électriques, en particulier ceux qui ont besoin d'un courant d'alimentation non alternatif et qui, à cette fin, comportent un circuit d'alimentation qui incorpore un convertisseur destiné à redresser le courant alternatif fourni par les réseaux publics d'alimentation.

Or, le but recherché est de fabriquer des appareils, en particulier des lampes et tubes à fluorescence, aussi standardisés que possible, sinon universels, et qui fonctionnent de manière aussi régulière que possible. Mais le fonctionnement correct de ces appareils, lampes ou tubes à fluorescence nécessite une alimentation stable, ce qui ne peut être obtenu à ce jour par suite de la conjonction permanente des deux facteurs essentiels d'instabilité, à savoir l'irrégularité de la source et le comportement variable de l'appareil lui-même.

Le fonctionnement normal d'un élément d'éclairage à fluorescence est très différent de celui d'un élément d'éclairage à incandescence (nommé couramment « ampoule ») qui est simplement raccordé directement à la source de courant puisque c'est ce courant même qui provoque l'incandescence, c'est-à-dire la lumière.

En effet, le filament de l'ampoule à incandescence n'a un rayonnement lumineux que parce qu'il est une résistance simple dont les caractéristiques sont invariables, si bien que pour le fournisseur d'électricité le courant alternatif reste parfaitement sinusoïdal et en phase avec la tension, aucune perturbation ne provenant des éléments à incandescence.

Au contraire, un élément d'éclairage à fluorescence nécessite un circuit d'entrée ou « ballast » car il faut générer constamment des décharges successives dans le gaz que contient l'élément d'éclairage, ce qui implique aux bornes de l'élément une alimentation intermittente, à battements, ce qui est réalisé jusqu'à maintenant au moyen d'un circuit oscillant qui doit, par nature, être en déséquilibre alors qu'il est naturellement en situation d'équilibre, de sorte qu'il ne peut pas entrer en fonction automatiquement et de lui-même, et qu'il doit être associé à un circuit d'amorçage, de démarrage.

Ce circuit comprend un transformateur dit « à fuites » qui limite le courant parvenant à l'élément à fluorescence et qui est à l'origine d'un déphasage entre le courant et la tension, conduisant à un mauvais rendement qu'actuellement on corrige en intercalant des batteries de condensateurs sur la ligne d'alimentation, ce qui est une solution coûteuse.

Il faut rappeler que la puissance délivrée à un dispositif électrique est égale au produit du courant par la tension, de sorte que leur déphasage conduit nécessairement à une baisse de puissance, et donc d'efficacité, sans pour autant diminuer en rien la consommation électrique.

On mesure cette puissance à partir du rapport puissance réelle/puissance apparente, désigné par l'expression « cos ϕ », étant rappelé que la valeur trigonométrique maximum du cosinus d'un angle est égale à 1.

Un courant fourni par un réseau de distribution a un cos ϕ = 1, ce qui est aussi le cas pour un élément d'éclairage à incandescence.

Un problème particulièrement aigu provient des éléments à fluorescence dits « lampes fluocompactes » avec lesquelles non seulement le courant n'est pas en phase avec la tension : cos ϕ ≈ 0,6 mais surtout le courant est impulsionnel, c'est-à-dire que sa valeur a des variations brusques et intermittentes provoquant de nombreuses perturbations du réseau de distribution standard et des distorsions harmoniques dont le taux peut dépasser 130 %.

Les irrégularités d'alimentation et de fonctionnement génèrent des surtensions qui occasionnent de fortes contraintes sur des composants importants du circuit d'entrée (notamment de condensateurs chimiques), ces contraintes pouvant même provoquer la destruction du ou des composants en cause.

La différence essentielle entre un courant alternatif et un courant redressé est que le premier s'inverse alors que le second ne s'inverse pas. En revanche, tous deux ont une valeur et une tension variables selon une fréquence donnée. Par conséquent, un courant redressé a une fréquence coordonnée à celle du courant alternatif dont il est issu (selon deux amplitudes différentes) et subit exactement les mêmes variations que celles du courant alternatif d'origine.

Des distorsions harmoniques apparaissent dans les appareils électriques dont l'alimentation qui comportent un pont de diodes en entrée monté en série avec un condensateur réservoir de forte capacité (téléviseurs, télécopieurs, magnétoscopes, etc.) et aussi mais non exclusivement dans les lampes à fluorescence.

Les inconvénients liés au fonctionnement de ces appareils sont tels qu'une réglementation internationale est destinée à imposer aux fabricants le respect impératif de caractéristiques qui sont loin d'être atteintes actuellement : déphasage courant/tension faible (cos ϕ > 0,9) et taux de distorsions harmoniques inférieur à 30 %.

On a déjà pensé à améliorer le circuit d'entrée des appareils en cause, en particulier les éléments d'éclairage à fluorescence, en régulant leur alimentation et en stabilisant leur fonctionnement, c'est-à-dire en tentant de leur donner un comportement linéaire ou tout au moins conforme aux impératifs de la norme réglementaire.

Ainsi, on peut citer le brevet US 5 134 556 qui décrit un convertisseur dont le circuit d'entrée comprend un montage connu sous le nom de demi-pont oscillant, comprenant une branche dite « active » sur laquelle se trouvent deux transistors et une branche dite « passive » sur laquelle se trouvent deux condensateurs.

Ce dispositif est théoriquement satisfaisant mais ne peut pas s'appliquer aux appareils d'éclairage ayant des éléments à fluorescence car, précisément, il suppose :
- que la tension du courant alternatif d'alimentation présent sur le réseau de distribution soit stable,
- que la charge (l'appareil alimenté) ait un comportement linéaire,
- que les caractéristiques des composants électriques du circuit aient des valeurs correctement calculées et réalisées pour chaque application.

Or, on a montré plus haut que ces conditions sont presque impossibles à obtenir individuellement et tout à fait impossibles à obtenir simultanément, en particulier avec des éléments d'éclairage à fluorescence : la tension d'alimentation n'est pas stable et le comportement de la charge ne l'est pas non plus, non seulement en raison de la structure même des lampes et tubes à fluorescence mais du fait que cette structure évolue, vieillit, avec le temps et que ses caractéristiques s'altèrent.

Ce dispositif n'est donc pas satisfaisant puisqu'il ne permet pas de compenser les surcourants et les surtensions inhérentes au fonctionnement lui-même des éléments à fluorescence, et qui sont destructeurs pendant la phase d'allumage.

Ce dispositif ne permet de minorer le taux de distorsions harmoniques qu'à condition que les paramètres et composants du circuit soient d'une grande précision (fréquence, capacités, self, etc.).

On peut également citer le brevet FR 2 766 636 qui constitue un perfectionnement au dispositif décrit ci-dessus, en ce sens qu'il propose une solution visant à éviter les surtensions destructrices.

Mais il n'en est rien car s'il permet d'obtenir (dans des conditions données) un courant d'alimentation redressé correctement sinusoïdal et en phase avec la tension, c'est-à-dire ayant peu de variations de tension, toute augmentation du courant dans le circuit, quelle qu'en soit la cause, est répercutée sur un condensateur tampon et augmente aussi la tension à ce condensateur, ce qui aggrave le phénomène en l'amplifiant, si bien que tout le système s'emballe jusqu'à la destruction du convertisseur.

On connaît aussi le brevet EP 680 246 qui décrit un circuit d'alimentation d'un appareil d'éclairage à fluorescence comprenant un circuit d'oscillation qui est asservi à la tension d'entrée dont la valeur instantanée reste inchangée et dépend uniquement, comme on l'a indiqué ci-dessus, des variations du réseau d'alimentation. En d'autres termes, on subit les variations de tension et l'on tente de remédier à leurs conséquence en agissant non pas sur la tension « externe » (tension reçue à l'entrée) mais sur le circuit interne.

Le brevet CA 2 103 627 décrit lui aussi un circuit pour lequel on considère la tension d'entrée comme une information que l'on recueille pour en déduire des paramètres de régulation. On ne modifie donc pas la tension d'entrée qui reste ce qu'elle est, avec ses variations inévitables.

On voit que ces solutions ne fournissent pas de résultats nets et fiables car des surtensions ou des surintensités se produisent toujours, pour différentes raisons : variations des caractéristiques électriques du réseau de distribution, non linéarité du comportement des éléments à fluorescence, vieillissement, température, etc.

La présente invention s'écarte de ces solutions connues en proposant un dispositif qui est adapté aux appareils cités plus haut, et en particulier aux éléments d'éclairage à fluorescence, qui assure leur fonctionnement satisfaisant en maintenant constant le courant dans la charge, c'est-à-dire dans tout appareil électrique à fonctionnement intrinsèque non linéaire.

A cette fin, l'invention a pour objet un appareil électrique, notamment élément éclairant indépendant ou associé à un ensemble tel qu'un luminaire, en particulier lampe ou tube à fluorescence, constituant une charge et associé à un ensemble d'alimentation composé d'un circuit d'entrée devant être relié à une source de courant alternatif et comprenant différents composants afin que la charge puisse être alimentée à fréquence élevée et à courant aussi stable que possible, ensemble d'alimentation comprenant à cette fin un redresseur de courant alternatif et un convertisseur de fréquence, caractérisé en ce que le circuit d'entrée comprend d'une part un hacheur qui est relié à la sortie d'un générateur de fréquence asservi à la tension résultante présente à l'entrée dudit hacheur et d'autre part deux diodes montées en série et entre lesquelles se trouve une jonction d'une ligne de retour.

Selon d'autres caractéristiques de l'invention :
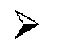 le circuit d'entrée comprend, entre le hacheur et l'élément éclairant, un composant à impédance variable en fonction de la fréquence, notamment une inductance afin de limiter le courant d'entrée à l'élément éclairant ;
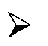 le régulateur est un oscillateur piloté par la tension résultante présente à l'entrée dudit hacheur;
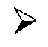 la sortie de la charge est reliée à une ligne de retour sur laquelle est intercalé un condensateur tandis que l'entrée de ladite charge reçoit une ligne aboutissant au régulateur et sur laquelle sont intercalés un condensateur et une diode, ladite ligne recevant une ligne de retour munie d'une diode et raccordée à la ligne de retour ;
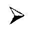 une ligne de référence est branchée sur une jonction, à l'entrée du hacheur et aboutit au régulateur ;
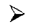 la ligne de référence reçoit un prolongement qui aboutit à une circuiterie de démarrage ;
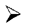 la circuiterie de démarrage comprend un contrôleur de tension accouplé au régulateur et apte, lors de la mise sous tension de l'appareil, à causer une fréquence élevée à l'entrée de la charge puis à l'abaisser progressivement vers la fréquence de résonance ;
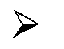 l'appareil est formé d'un support pour un tube à fluorescence, l'ensemble d'alimentation étant placé sur le support ;
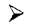 l'appareil est formé d'un luminaire pour au moins une lampe qui contient un tube à fluorescence et qui présente un culot conducteur de raccordement à une arrivée de courant alternatif, culot qui est creux et qui contient l'ensemble d'alimentation raccordé d'une part au culot conducteur et d'autre part au tube à fluorescence.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique avec coupe partielle d'un tube à fluorescence de type connu dont le support est susceptible de recevoir un ensemble d'alimentation conforme à l'invention.

La figure 2 est une vue schématique d'une ampoule dite « fluocompacte », contenant un tube à fluorescence et formée d'un boîtier inférieur muni d'un culot conducteur, et d'un capot translucide supérieur, le boîtier contenant un ensemble d'alimentation conforme à l'invention.

La figure 3 est une vue schématique de l'ampoule de la figure 2 montrant ses différentes parties constitutives séparées les unes des autres.

La figure 4 est un schéma électrique de l'ensemble d'alimentation conforme à l'invention, convenant aussi bien à un support pour tube qu'à un boîtier d'ampoule à fluorescence.

La figure 5 est un schéma correspondant à celui de la figure 4 lorsqu'il vient d'être mis sous tension et que, par conséquent, le tube est en phase de démarrage.

La figure 6 est un schéma correspondant à celui de la figure 4 lorsqu'il est en fonctionnement normal, après que la phase de démarrage soit terminée.

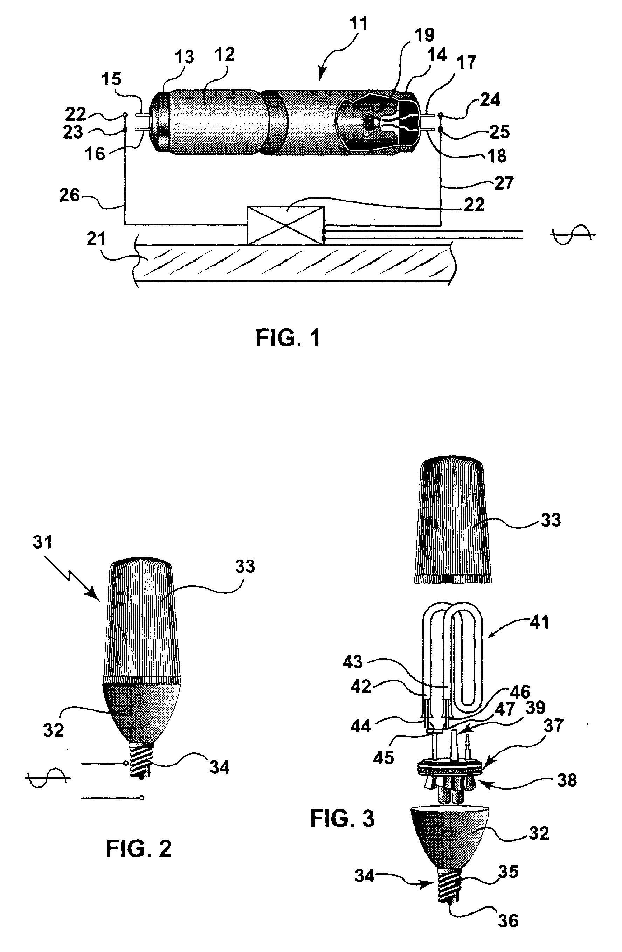

En se reportant à la figure 1, on voit un tube à fluorescence 11 de type connu et qu'il n'est pas nécessaire de décrire en détails, excepté pour rappeler qu'il présente une partie centrale translucide 12 et deux culots 13 et 14 possédant chacun deux broches conductrices 15-16 et 17-18. On observe, sur la partie droite de la figure 1, que le tube 11 contient un filament constituant une électrode 19 raccordée aux broches 17 et 18.

Une seconde électrode interne symétrique (non visible sur le dessin) se trouve à l'intérieur du tube 11, près du culot 13, raccordée aux broches 15 et 16.

Le tube à fluorescence 11 doit être alimenté en courant redressé et haché, comme rappelé plus haut, alors qu'il ne contient aucun ensemble d'alimentation, de sorte qu'il ne peut pas être connecté directement à une alimentation de courant standard.

En outre, il existe des tubes de plusieurs longueurs et de plusieurs diamètres et il faut utiliser des supports exactement adaptés à ces différentes dimensions, et l'on utilise un tel support 21 pour y assujettir un ensemble d'alimentation 22 contenant un circuit d'entrée conforme à l'invention, comme on le décrit plus loin.

Les broches 15-16 et 17-18 sont alimentées au moyen de contacts 22-23 et 24-25 placés sur des lignes 26 et 27 raccordées au circuit d'entrée de l'ensemble d'alimentation 22.

Sur les figures 2 et 3, on voit une lampe 31 qui présente extérieurement un boîtier inférieur 32 et un capot supérieur translucide 33, le boîtier 32 étant solidaire d'un culot 34 qui possède un pas de vis extérieur conducteur 35 et un plot central 36 isolé du pas de vis 35.

Le boîtier inférieur 32 est creux et sert de logement à un ensemble d'alimentation 37 comprenant un circuit d'entrée 38 et équivalent à l'ensemble 22. La partie supérieure de l'ensemble 37 est munie de supports et de contacts 39 pour un tube à fluorescence 41 du même type que le tube 11 mais de plus petit diamètre et replié sur lui-même pour être plus compact.

Les deux extrémités 42 et 43 du tube 41 sont voisines l'une de l'autre et parallèles, et chacune possède deux broches 44-45 et 46-47.

L'ensemble d'alimentation est raccordé d'une part au culot conducteur 34 et d'autre part au tube 41. En d'autres termes, l'ensemble d'alimentation est intercalé entre la source de courant alternatif et le tube à fluorescence et fournit à celui-ci le courant redressé et haché qui lui est nécessaire.

Lorsque le tube 41 est mis en place, il est maintenu par les supports 39 et raccordé au circuit d'entrée 38. Le capot supérieur translucide 33 est alors placé en cloche pardessus le tube 41 et assujetti au boîtier 32 par vissage, emboîtage ou autre moyen.

Le support 21, spécifique au tube 11 répond strictement à des préoccupations techniques et l'on ne peut lui donner qu'une esthétique minimale qui ne convient pas à son intégration dans un environnement de style, raison pour laquelle les tubes cylindriques tels que 11 et leur support 21 portant l'ensemble d'alimentation 22 ne sont utilisés que dans des endroits utilitaires : salles de bain, bureaux, ateliers, etc.

La lampe de type 31, au contraire, porte un culot 34 qui est standard et qui s'adapte aux douilles elles-mêmes standard qui peuvent équiper des objets de tout style : luminaires, vases, appliques, lampes et autres. Comme la lampe 31 contient ses propres moyens d'adaptabilité du courant alternatif standard, elle ne nécessite aucun support particulier et est entièrement autonome.

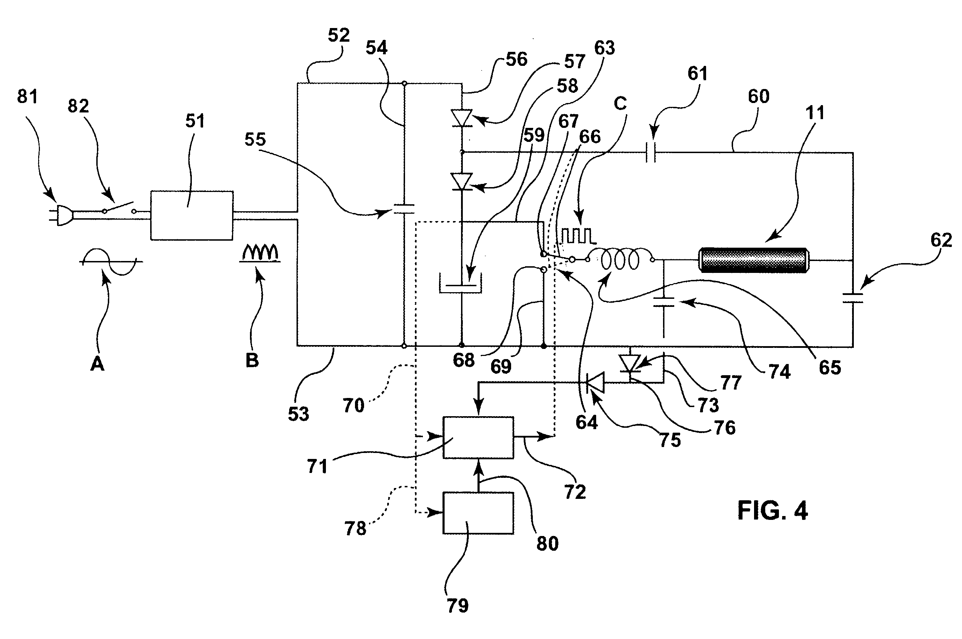

On va maintenant décrire en regard de la figure 4 l'ensemble d'alimentation conforme à l'invention et qui correspond aussi bien à l'ensemble 22 qu'à l'ensemble 37.

Le courant alternatif fourni par un réseau de distribution standard, et figuré par le symbole A, aboutit à un redresseur 51 à la sortie duquel le courant figuré par le symbole B est redressé et à double alternance, et aboutit au circuit proprement dit par une ligne d'entrée 52 correspondant à une ligne de sortie 53.

Deux jonctions en parallèle 54 munie d'un condensateur 55, et 56 munie de deux diodes 57 et 58 et d'un condensateur chimique 59, constituent ensemble un modulateur compensateur.

Entre les diodes 57 et 58 une ligne 60 rejoint la ligne de sortie 53, avec interposition d'un condensateur de liaison 61 et d'un condensateur de compensation 62.

Une ligne 63 est raccordée à la jonction 56 entre la diode 58 et le condensateur chimique 59 d'une part, et à la ligne 60 entre les deux condensateurs 61 et 62 d'autre part. Sur cette ligne 63 sont montés en série les électrodes, ou filaments, 19.1 et 19.2 d'un tube à fluorescence 11, séparés par un condensateur 63a, un hacheur 64 et une inductance 65, constituant ensemble un circuit résonnant à une fréquence donnée, par exemple 60 KHz (kilo Hertz).

Le hacheur 64 est figuré ici comme possédant un interrupteur à battement 66 actif entre un contact 67 de la ligne 63 et un contact 68 situé sur une branche 69 de la ligne de sortie 53. A la sortie du hacheur 64, le courant, figuré par le symbole C, est découpé régulièrement en impulsions successives à une fréquence variant de 40 KHz à 90 KHz.

Dans la pratique, le hacheur 64 peut être un transistor de type connu, à la portée de l'Homme de Métier, et qu'il n'est donc pas nécessaire de décrire plus en détails.

Une ligne de référence 70 est raccordée à la jonction 56, au même point que la ligne 63, et aboutit à un générateur de fréquence 71 ayant une sortie 72 reliée au hacheur 64 afin d'en commander le fonctionnement.

Entre l'inductance 65 et l'entrée du tube 11, une ligne d'alimentation 73 aboutit au générateur de fréquence 71 avec interposition d'un condensateur 74 et d'une pompe à diode 75. Ce circuit d'alimentation du générateur de fréquence 71 est bouclé par une ligne de retour 76 munie d'une diode de 77 et raccordée à la ligne de sortie 53.

La ligne de référence 70 a un prolongement 78 qui aboutit à un générateur de tension 79 dont la sortie 80 est reliée au générateur de fréquence 71.

L'ensemble du circuit qui vient d'être décrit est alimenté en courant alternatif à partir du réseau de distribution standard auquel il est relié. Ici, on a représenté une fiche du commerce 81 devant être engagée dans une prise banale, auquel cas il est habituel de prévoir un interrupteur 82 de tout type connu, permettant de mettre le circuit sous tension ou pas, sans manipuler la fiche 81 qui est mise en place dans la prise une fois pour toutes.

Sur la figure 4 qui représente le circuit complet, on voit que l'interrupteur 82 est ouvert, le circuit étant donc non alimenté, au repos, le tube 11 éteint.

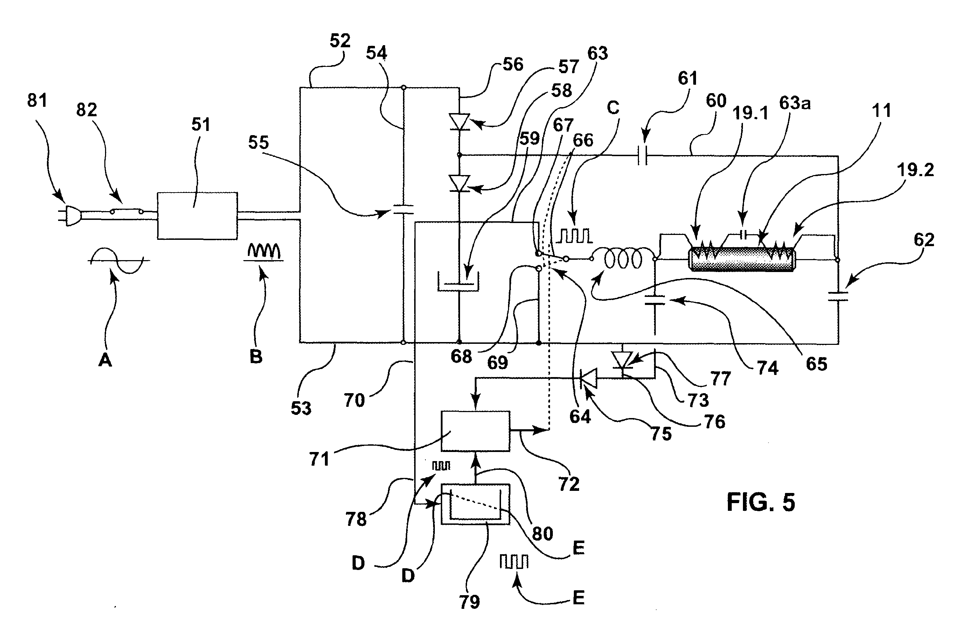

La figure 5 représente la situation du circuit lorsque l'interrupteur 82 vient d'être fermé, le circuit étant alors alimenté et en phase de démarrage, bien entendu à titre temporaire, pour une durée très courte, correspondant au temps de chauffage des électrodes (ou filaments) 19.1 et 19.2 du tube 11, c'est-à-dire de l'ordre d'une demi-seconde.

Le générateur de tension 79 est en fonction lors de l'allumage seulement, par le courant qui lui est fourni par la ligne de référence 70 et son prolongement 78.

Il génère une tension décroissante dite « rampe descendante », la fréquence de démarrage, symbolisé en D, étant très supérieure à la fréquence de 60 KHz figurée en E, propre au circuit résonant.

Le courant délivré est faible et la fréquence décroît régulièrement jusqu'à la fréquence de résonance à 60 KHz. Les filaments d'électrodes 19.1 et 19.2 chauffent et la tension aux bornes du tube 11 devient suffisante, à savoir de l'ordre de plusieurs centaines de Volts, pour amorcer l'ionisation du gaz contenu dans le tube 11, puis l'allumage.

La phase de démarrage est donc terminée, le tube 11 s'allume.

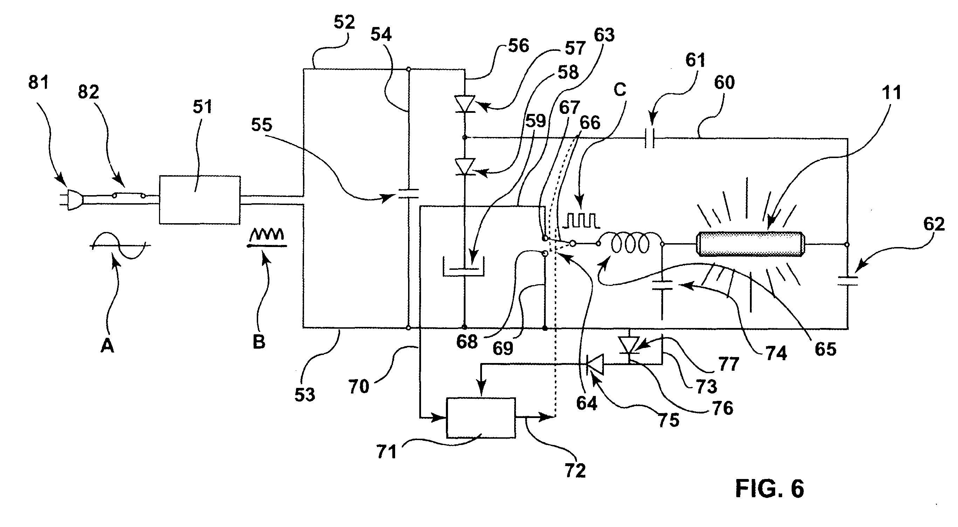

Sur la figure 6, on a représenté les éléments actifs du circuit lorsque l'appareil est en fonctionnement permanent, c'est-à-dire après la phase de démarrage.

Le générateur 79 n'est plus en fonction puisque les électrodes 19.1 et 19.2 du tube 11 ont atteint leur température de fonctionnement normal.

Pour que le pilote 71 puisse fonctionner, il faut lui fournir un courant, ce que l'on obtient en prélevant une faible partie de l'énergie issue du hacheur 64, qui est conduite au pilote 71 par la ligne 73, via le condensateur 74 et la pompe à diode 75.

Pendant le fonctionnement normal, la fréquence délivrée à la sortie de l'inductance 65, varie en fonction de l'action du pilote 71 qui dépend elle-même de la tension résultante, mesurée sur la jonction 56 et présente sur la ligne de référence 70.

Le condensateur 63a est devenu inactif, et seule l'impédance de l'inductance 65 limite le courant dans le tube 11.

Si pour une raison quelconque ce courant tend à augmenter, la tension aux bornes du condensateur chimique 59 augmente, de même qu'elle augmente sur la ligne de référence 70. Le pilote 71 a donc sur le hacheur 64 une action corrélative qui est d'augmenter la fréquence à l'entrée de l'inductance 65, ce qui augmente son impédance et corrige donc le courant.

En résumé, le pilote 71 régule la fréquence du courant fourni au tube 11 en fonction de la tension résultante alimentant le circuit via l'inductance 65 qui ajuste corrélativement le courant d'alimentation du tube 11. Outre que le tube 11 ne subit plus de contraintes de fatigue, voire de destruction, l'installation ne peut plus s'emballer et la tension sur le réseau de distribution public auquel le circuit est raccordé par la fiche 81 ne subit plus de variations intempestives.

Ainsi, la puissance et l'éclairement restent sensiblement constants pour des variations du réseau standard 230 Volts, de 200 à 270 Volts, tout en présentant un cos ϕ ≈ 1 et un taux de distorsions harmoniques ≈15 %.

Il ressort de la description ci-dessus que l'invention permet de réaliser un circuit d'entrée simple, donc peu coûteux, et de fonctionnement sûr, grâce au contrôle permanent des caractéristiques électriques à l'entrée de la charge en prévenant ainsi tout emballement.

Après allumage, en fonctionnement normal, la fréquence est continuellement variable et modifie l'impédance du composant à l'entrée de la charge, ce qui revient à maintenir constant le courant dans la charge.

En d'autres termes, la solution de l'invention consiste à maîtriser le courant dans la charge en pilotant la fréquence du courant redressé d'alimentation. On asservit le convertisseur de fréquence à une combinaison tension / fréquence, de sorte que toute variation de tension se traduit par une variation de fréquence qui entraîne un changement d'impédance du circuit et, donc, une compensation des différences de tensions. Ainsi, on supprime les surtensions en augmentant corrélativement la résistance interne du circuit et, inversement on supprime les sous-tensions en diminuant cette résistance interne.

## Revendications

1. Appareil électrique, notamment élément éclairant indépendant ou associé à un ensemble tel qu'un luminaire, en particulier lampe ou tube à fluorescence, constituant une charge et associé à un ensemble d'alimentation composé d'un circuit d'entrée devant être relié à une source de courant alternatif et comprenant différents composants afin que la charge puisse être alimentée à fréquence élevée et à courant aussi stable que possible, ensemble d'alimentation comprenant à cette fin un redresseur de courant alternatif et un convertisseur de fréquence, caractérisé en ce que le circuit d'entrée comprend d'une part un hacheur (64) qui est relié à la sortie d'un générateur de fréquence (71) asservi à la tension résultante présente à l'entrée dudit hacheur (64) et d'autre part deux diodes (57 et 58) montées en série et entre lesquelles se trouve une jonction d'une ligne de retour (60).

2. Appareil selon la revendication 1, caractérisé en ce que le circuit d'entrée comprend, entre le hacheur (64) et l'élément éclairant (11), un composant à impédance variable en fonction de la fréquence, notamment une inductance (65), afin de limiter le courant d'entrée à l'élément éclairant (11).

3. Appareil selon la revendication 1, caractérisé en ce que le régulateur (71) est un oscillateur piloté par la tension résultante présente à l'entrée dudit hacheur (64).

4. Appareil selon la revendication 1, caractérisé en ce que la sortie de la charge (11) est reliée à une ligne de retour (53) sur laquelle est intercalé un condensateur (62) tandis que l'entrée de ladite charge (11) reçoit une ligne (73) aboutissant au régulateur (71) et sur laquelle sont intercalés un condensateur (74) et une diode (75), ladite ligne (73) recevant une ligne de retour (76) munie d'une diode (77) et raccordée à la ligne de retour (53).

5. Appareil selon la revendication 4, caractérisé en ce qu'une ligne de référence (70) est branchée sur une jonction (56), à l'entrée du hacheur (64) et aboutit au régulateur (71).

6. Appareil selon la revendication 4, caractérisé en ce que la ligne de référence (70) reçoit un prolongement (78) qui aboutit à une circuiterie de démarrage (79).

7. Appareil selon la revendication 6, caractérisé en ce que la circuiterie de démarrage (79) comprend un contrôleur de tension accouplé au régulateur (71) et apte, lors de la mise sous tension de l'appareil, à causer une fréquence élevée à l'entrée de la charge (11) puis à l'abaisser progressivement vers la fréquence de résonance.

8. Appareil selon la revendication 1, caractérisé en ce qu'il est formé d'un support (21) pour un tube à fluorescence (11), l'ensemble d'alimentation (22) étant placé sur le support (21).

9. Appareil selon la revendication 1, caractérisé en ce qu'il est formé d'un luminaire pour au moins une lampe (31) qui contient un tube à fluorescence (41) et qui présente un culot conducteur (34) de raccordement à une arrivée de courant alternatif, culot (34) qui est creux et qui contient l'ensemble d'alimentation (37) raccordé d'une part au culot conducteur (34) et d'autre part au tube à fluorescence (41)
